# EUROPÄISCHE PATENTSCHRIFT

(11) **EP 3 348 722 B1**
(45) Veröffentlichungstag und Bekanntmachung des Hinweises auf die Patenterteilung: **01.04.2020**
(21) Anmeldenummer: 17151375.7
(22) Anmeldetag: 13.01.2017
(51) Int. Cl.: E04B 1/41, E04C 3/12, E04C 3/18, F16B 2/14, F16B 5/00, E04B 1/26

(54) **VERBINDER UND VORRICHTUNG ZUM KOPPELN VON VERTIKALBAUTEILEN**
CONNECTOR AND DEVICE FOR COUPLING VERTICAL COMPONENTS
ÉLÉMENT DE LIAISON ET DISPOSITIF D'ACCOUPLEMENT DE COMPOSANTS VERTICAUX

(43) Veröffentlichungstag der Anmeldung: 18.07.2018
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- EP-A1- 3 147 419
- JP-A- 2005 076 318
- US-A- 3 585 771
- US-A- 5 050 366

## Beschreibung

Die vorliegende Erfindung betrifft einen Verbinder zum Verbinden eines Trägers aus Holz mit einem Vertikalbauteil, umfassend zwei Beschläge, von denen der eine mit seiner einen Seite an einer Stirnseite des Trägers und der andere mit seiner einen Seite am Vertikalbauteil montierbar ist, wobei die Beschläge mit ihren jeweils anderen Seiten aneinander zur Anlage bringbar sind, und zwei Spannbacken, welche die Beschläge an diametralen Enden ergreifen und mittels zumindest eines etwa parallel zu den genannten anderen Seiten verlaufenden Spannglieds gegeneinander spannbar sind. Die Erfindung betrifft ferner eine Vorrichtung zum Koppeln zweier Vertikalbauteile mit einem Träger aus Holz, insbesondere Brettschichtholz, und zwei Verbindern.

Derartige Verbinder werden beispielsweise von der Firma Knapp GmbH, Euratsfeld, Österreich, unter der Marke Megant® vertrieben und sind aus der EP 3 147 419 A1 bekannt (dieses Dokument fällt unter Artikel 54(3) EPÜ). Sie eignen sich besonders zum Aufbau von Schwerlastverbindungen im Ingenieurholzbau, beispielsweise zum Verbinden von Haupt-, Neben- und/oder Querträgern od.dgl. mit Stützen, Pfosten, Wänden oder ähnlichen Vertikalbauteilen. Die Beschläge und Spannbacken sind dabei meist aus Metall, z.B. hochfestem Aluminium; die Träger sind aus Holz, beispielsweise Brettschichtholz (BSH), insbesondere Leimbinder, sie haben eine bessere Hitze- und Feuerresistenz und bei gleicher Tragfestigkeit ein geringeres Gewicht als beispielsweise Stahlträger; allerdings sind Holzträger voluminöser. Die Vertikalbauteile, z.B. Wände, Stützen, Pfosten od.dgl., können ebenfalls aus Holz aber auch aus Beton, Mauerwerk oder Metall sein.

Auch aus US 3,585,771 ist ein Verbinder bekannt.

Die Erfindung setzt sich zum Ziel, solche Verbinder und Vorrichtungen in Bezug auf Belastbarkeit, Haltbarkeit und Baugröße weiter zu verbessern, sodass diese bei gleichem Gewicht oder gleicher Baugröße dauerhaft größere Kräfte aufnehmen können.

Dieses Ziel wird gemäß einem ersten Aspekt der Erfindung mit einem Verbinder der einleitend genannten Art im Zusammenwirken mit einem Träger erreicht, der einen Untergurt aus Stahl hat, welcher Verbinder sich gemäß der Erfindung dadurch auszeichnet, dass einer der Spannbacken eine Verankerung oder eine Spanneinrichtung für den Untergurt des Trägers hat.

Auf diese Weise wird nicht nur der hölzerne Träger mit dem Vertikalbauteil verbunden, sondern die zusätzliche Möglichkeit geschaffen, den Untergurt direkt oder über den Verbinder mit dem Vertikalbauteil zu verbinden und unter Zugspannung zu setzen, wodurch die Vertikalbauteile an den beiden Stirnseiten des Trägers zusätzlich über den Untergurt miteinander gekoppelt werden. Eine solche Kopplung über den Untergurt aus Stahl erhöht die möglichen aufnehmbaren Kräfte und erlaubt bei Spannung des Untergurts ohne wesentliche Festigkeitseinbußen sogar ein Spiel zwischen Beschlägen und Spannbacken der Verbindung, wie es manchmal unvermeidbar ist oder sich nach einiger Zeit einstellt. Ein solcher Verbinder ermöglicht somit eine besonders dauerhafte, infolge der zusätzlichen Kopplung flexible und dadurch deutlich erdbebensicherere Verbindung von Träger und Vertikalbauteil.

In der Variante, wonach einer der Spannbacken eine Verankerung hat, ist bevorzugt die Verankerung eine Klemme, besonders bevorzugt eine Schraubklemme. Dadurch kann der Untergurt direkt im Spannbacken geklemmt werden. Die beiden mittels des Spannglieds gegeneinander gespannten Spannbacken übertragen darauf die Zugspannung des Untergurts über den genannten anderen Beschlag auf das Vertikalelement.

Hat in der alternativen Variante einer der Spannbacken eine Spanneinrichtung, umfasst vorteilhafterweise der andere Spannbacken eine Umlenkung für ein flexibles Ende des Untergurts zur Spanneinrichtung. In diesem Fall kann der Untergurt mithilfe der Spanneinrichtung gespannt werden. Dabei übertragen wieder die Spannbacken die Spannung des Untergurts über den genannten anderen Beschlag auf das Vertikalelement. Es kann, wenn gewünscht, ein weiteres Spannglied für die beiden Spannbacken entfallen: Spanneinrichtung im einen Spannbacken und Umlenkung im anderen Spannbacken bilden in diesem Fall gemeinsam mit dem gespannten Untergurt bzw. seinem flexiblen Ende das Spannglied für das Gegeneinanderspannen der Spannbacken.

Besonders günstig ist es, wenn dabei die Umlenkung eine im Spannbacken drehbar gelagerte Rolle ist. Eine solche Rolle erleichtert das Spannen des flexiblen Endes des Untergurts und sorgt für eine gleichmäßige Verteilung der Zugspannung.

In einer günstigen Ausführungsform des Verbinders umfasst das genannte Spannglied eine Gewindestange, welche in einander zugewandten Halbkehlen der genannten anderen Seiten aufgenommen ist. Die Verwendung einer Gewindestange einerseits und deren Durchführen in Halbkehlen zwischen den beiden Beschlägen andererseits erleichtern den Zusammenbau des Verbinders beim Verbinden von Träger und Vertikalbauteil.

In einem zweiten Aspekt schafft die Erfindung eine Vorrichtung zum Koppeln zweier Vertikalbauteile, umfassend einen Träger aus Holz, insbesondere Brettschichtholz, mit einem Untergurt aus Stahl, welcher an beiden Stirnseiten des Trägers zugänglich ist, und zwei Verbinder der vorgenannten Art zum Verbinden der beiden Stirnseiten des Trägers mit jeweils einem Vertikalbauteil, wobei der Untergurt an jedem seiner Enden direkt oder über einen der Verbinder mit einem Vertikalbauteil gekoppelt ist und die Vorrichtung zumindest eine Spanneinrichtung zum Spannen des Untergurts hat.

Ein Träger solcher Art ist beispielsweise aus den Schriften JP 2005 076318 A bzw. US 5 050 366 A bekannt und vereint die günstigen Eigenschaften von Stahl, nämlich Festigkeit und geringes Volumen, und Holz, nämlich geringes Gewicht und hohe Hitze- und Feuerresistenz. Der Untergurt kann über den Verbinder, d.h. durch Verankerung an diesem, oder andererseits durch Spannen in dessen Spanneinrichtung mit dem Vertikalbauteil verbunden und unter Zugspannung gesetzt werden. Somit werden auch die Vertikalbauteile über den Untergurt unter Zugspannung miteinander gekoppelt. Sind mehrere Träger, Verbinder und Vertikalbauteile in Flucht angeordnet, so können die Untergurte mehrerer Träger auch miteinander verbunden und an den beiden Enden der Flucht verankert und gemeinsam unter Spannung gesetzt werden. Jedenfalls ermöglicht der Träger eine dauerhaft stabile, besonders erdbebensichere Anordnung aus Träger(n), Verbindern und Vertikalbauteilen.

Zur weiteren Erhöhung des Brandwiderstandes ist der Untergurt bevorzugt in einer holzabgedeckten Nut an der Unterseite des Trägers aufgenommen.

Besonders einfach ist es, wenn der Untergurt durch zumindest ein Stahlseil gebildet ist. Das Stahlseil bzw. die Stahlseile sind nicht nur zugfest sondern auch flexibel und deshalb einfacher handhabbar.

In einer günstigen Alternative ist der Untergurt durch zumindest einen Stab gebildet. Ein solcher Stab bzw. solche Stäbe, z.B. Armierungsstahl-Stäbe, sind in vielerlei zugfesten Ausführungsformen kostengünstig erhältlich. Um an den Stirnseiten des Trägers eine einfache Anbindung an den Stab zu ermöglichen, ist der Stab bevorzugt ein Gewindestab.

Besonders vorteilhaft ist es, wenn der Stab an zumindest einer seiner Stirnseiten ein flexibles Ende zum Verankern in einer Verankerung (33) eines der Spannbacken (23, 24) oder zum Spannen in einer Spanneinrichtung (34) eines der Spannbacken (23, 24) hat, welches über eine Muffe am Stab montiert ist. Dies vereinfacht die Handhabung bei Herstellung, Transport und Einbau des Trägers und erhöht die Flexibilität bei Entwurf und Ausführung der Anordnung aus Träger(n), Verbindern und Vertikalbauteilen.

Dabei ist es günstig, wenn die Muffe in einer stirnseitigen Ausnehmung des Trägers sitzt. Auf diese Weise kann ein schwierig handhabbarer Überstand der starren Muffe oder des starren Stabs an der Stirnseite des Trägers vermieden werden.

Besonders einfach ist das Spannen des Untergurts, wenn im Träger eine von außen betätigbare Spanneinrichtung für den Untergurt aufgenommen ist. In dieser Variante müssen die stirnseitigen Enden des Trägers bloß verankert werden; die Spannung wird über die Spanneinrichtung im Träger aufgebracht. Eine solche Spanneinrichtung kann beispielsweise als Spannschloss bzw. Spannschraube ausgebildet und in einer aus Brandschutzgründen mit einer optionalen Holzabdeckung verschließbaren Ausnehmung des Trägers angeordnet sein.

Zur weiteren Erhöhung der Stabilität der Vorrichtung ist es vorteilhaft, wenn der Träger ferner einen in einer Nut an seiner Oberseite aufgenommenen Obergurt aus Stahl hat, welcher an den beiden Stirnseiten des Trägers zugänglich ist.

Hinsichtlich weiterer Varianten und Vorteile der Vorrichtung wird auf die vorstehenden Ausführungen zum Verbinder verwiesen.

Die Erfindung wird nachfolgend anhand von in den beigeschlossenen Zeichnungen dargestellten Ausführungsbeispielen näher erläutert. In den Zeichnungen zeigen:
Fig. 1 erfindungsgemäße Träger und Verbinder im an Vertikalbauteile angebauten Zustand in einer Seitenansicht,
Fig. 2 einen hölzernen Teil eines der Träger von Fig. 1 in einer Perspektivansicht von schräg oben,
Fig. 3 einen beispielhaften Vertikalbauteil mit montiertem Beschlag eines Verbinders von Fig. 1 in einer Perspektivansicht von schräg oben,
Fig. 4 den Träger von Fig. 2 im anbaufertigen Zustand mit montiertem Beschlag und aufgesetzten Spannbacken des Verbinders in einer Perspektivansicht von schräg oben,
die Fig. 5a und 5b den Verbinder von Fig. 1 mit einem Beschlag im geöffneten Zustand (Fig. 5a) bzw. mit beiden Beschlägen im geschlossenen Zustand (Fig. 5b), jeweils in einer Perspektivansicht von schräg oben,
Fig. 6 zwei Varianten erfindungsgemäßer Verbinder und Träger im an einen Vertikalbauteil angebauten Zustand im Querschnitt,
die Fig. 7a und 7b jeweils eine Variante eines Spannbackens des erfindungsgemäßen Verbinders in einer Perspektivansicht von schräg oben, und
Fig. 8 weitere Varianten erfindungsgemäßer Verbinder und Träger im an Vertikalbauteile angebauten Zustand im Querschnitt.

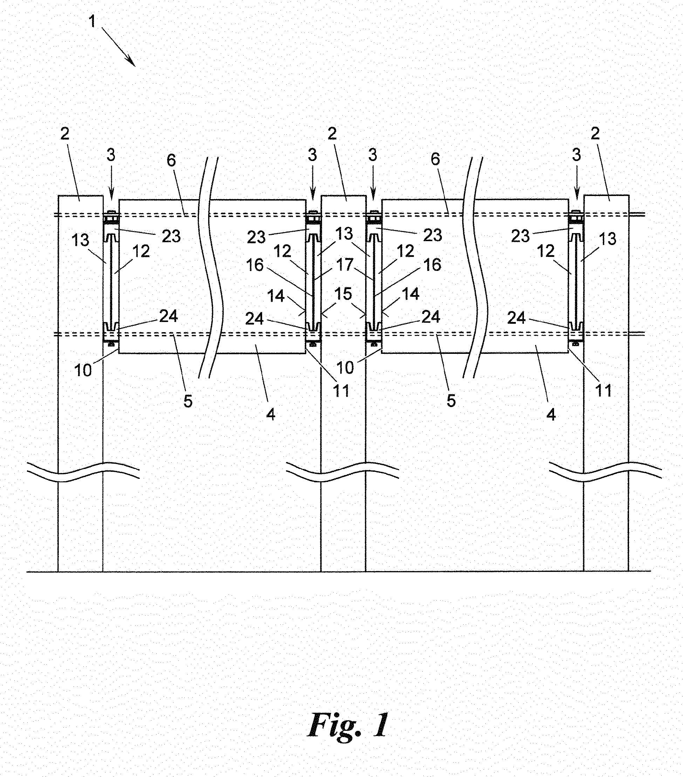

Fig. 1 zeigt eine Anordnung 1 mit mehreren Vertikalbauteilen 2, z.B. Stützen, Pfosten oder Wänden, und an diesen mit jeweils stirnseitigen Verbindern 3 angebrachten Trägern 4. Auf diese Weise werden einerseits die Vertikalbauteile 2 mit Hilfe der Verbinder 3 und Träger 4 miteinander verbunden; andererseits können Träger 4 und/oder Vertikalbauteile 2 weitere Bestandteile der Anordnung 1 tragen, z.B. eine Zwischendecke, eine Dachkonstruktion, usw. usf.

Die Vertikalbauteile 2 sind bevorzugt aus Holz, können jedoch alternativ z.B. aus Stahl, Mauerwerk oder Beton (mit und ohne Armierung) gefertigt sein. Die Träger 4, z.B. Haupt-, Neben- und/oder Querträgern bzw. Leimbinder, sind aus Holz, beispielsweise Brettschichtholz (BSH), die Verbinder 3 bevorzugt aus Metall, z.B. hochfestem Aluminium, gefertigt.

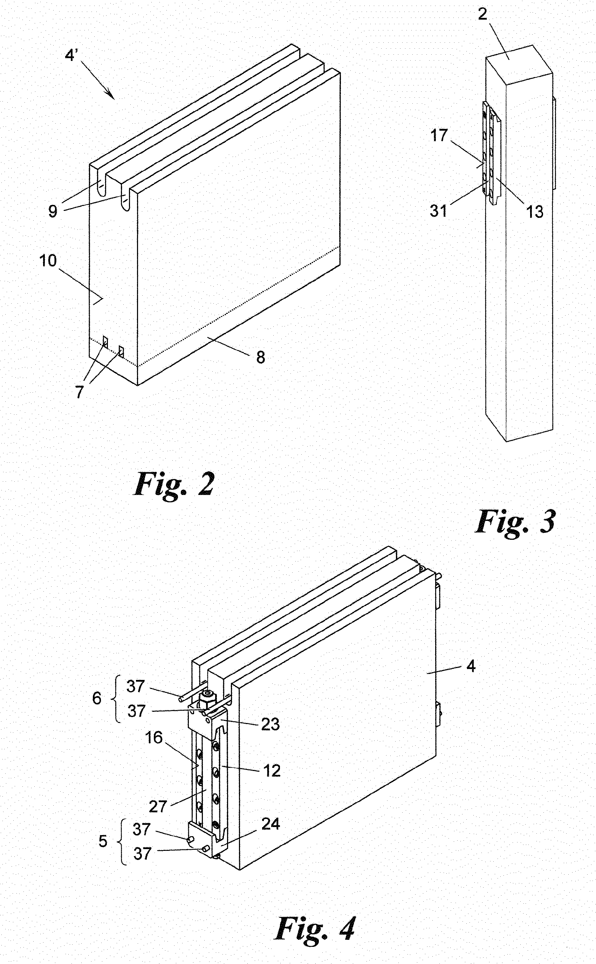

Zur Erhöhung der Stabilität der Anordnung 1 haben die Träger 4 einen Untergurt 5 aus Stahl und einen optionalen Obergurt 7 ebenfalls aus Stahl, welche direkt oder über die Verbinder 3 mit den Vertikalbauteilen 2 gekoppelt sind, wie im Folgenden anhand der Beispiele der Fig. 2 bis 7 näher erläutert wird.

Im Beispiel der Fig. 2 hat der Träger 4 an seiner Unterseite optionale Nuten 7, in welchen der - hier doppelstrangige - Untergurt 5 aus Stahl aufgenommen ist. Alternativ verläuft der Untergurt 5 an der Unterseite des Trägers 4. Zur Erhöhung des Brandwiderstandes können die Nuten 7 optional mit einer Holzabdeckung 8 versehen sein. Der dargestellte Träger 4 hat ferner optionale Nuten 9 an seiner Oberseite für den - hier ebenfalls doppelstrangigen - Obergurt 6. Der besseren Erkennbarkeit der Nuten 7, 9 wegen ist in Fig. 2 bloß der hölzerne Teil 4' des Trägers 4, d.h. ohne Untergurt 5 und Obergurt 6, dargestellt. Der Untergurt 5 ist, wie ebenso der Obergurt 6, an beiden Stirnseiten 10, 11 des Trägers 4 zugänglich, selbst wenn er in der holzabgedeckten Nut 7 an der Unterseite des Trägers 4 aufgenommen ist (Fig. 4).

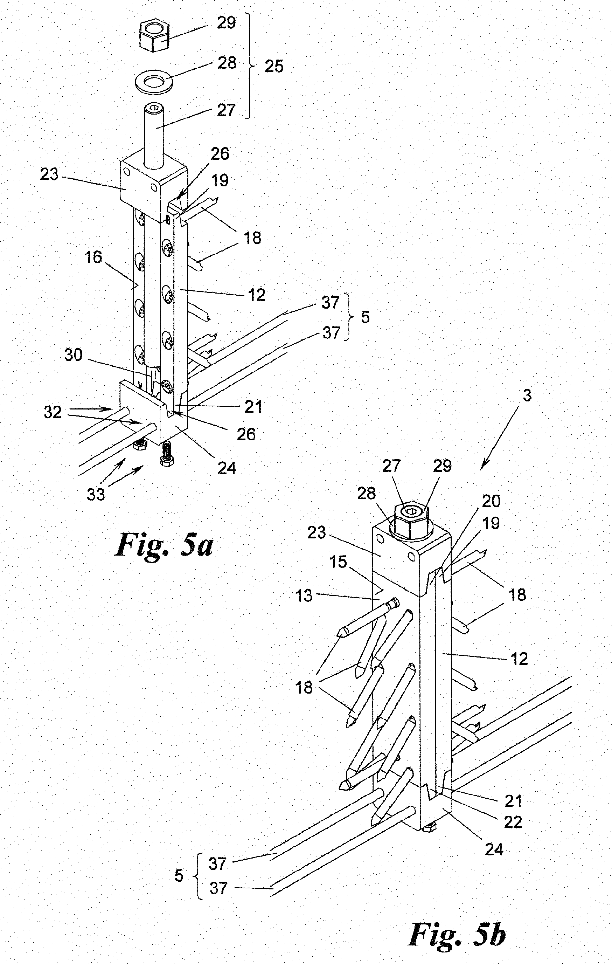

Gemäß den Beispielen der Fig. 3 bis 5b hat der Verbinder 3 zwei Beschläge 12, 13, von denen der eine Beschlag 12 mit seiner einen Seite 14 (Fig. 1) an einer Stirnseite 10, 11 des Trägers 4 montiert ist, und der andere Beschlag 13 mit seiner einen Seite 15 am Vertikalbauteil 2 montiert ist. Beim Verbinden des Trägers 4 mit dem Vertikalbauteil 2 sind die Beschläge 12, 13 mit ihren jeweils anderen Seiten 16, 17 aneinander zur Anlage gebracht (Fig. 1 und Fig. 5b). Zur Montage der Beschläge 12, 13 am Träger 4 bzw. Vertikalbauteil 2 können beispielsweise Schrauben 18 Nieten od. dgl. eingesetzt werden, von welchen gemäß dem Beispiel der Fig. 5a und 5b je nach Belastungsrichtung optional zumindest einige schräg angeordnet sein können.

Die Beschläge 12, 13 werden an ihren diametralen Enden 19, 20, 21, 22 - hier: den oberen Enden 19, 20 und den unteren Enden 21, 22 - von zwei Spannbacken 23, 24 ergriffen und beim Verbinden des Trägers 4 mit dem Vertikalbauteil 2 mittels zumindest eines Spannglieds 25, welches etwa parallel zu den genannten anderen Seiten 16, 17 der Beschläge 12, 13 verläuft, unter Zugspannung gebracht, d.h. gespannt. Jeder Spannbacken 23, 24 hat eine Keilnut 26 zur Aufnahme der aneinander anliegenden, dazu komplementär keilförmig ausgestalteten Enden 19, 20, 21, 22 der Beschläge 12, 13. Durch Gegeneinanderspannen der Spannbacken 23, 24 werden somit die Beschläge 12, 13 mit ihren genannten anderen Seiten 16, 17 aneinander angepresst.

Als Spannglied 25 kommt beispielsweise eine Gewindestange 27 in Frage, welche in bekannter Weise mit Unterlegscheiben 28 und Muttern 29 spannbar ist. Die Gewindestange 27 des zumindest einen Spannglieds 25 ist optional in einander zugewandten Halbkehlen 30, 31 der genannten anderen Seiten 16, 17 der Beschläge 12, 13 aufgenommen.

Wie insbesondere den Beispielen der Fig. 5a bis 8 zu entnehmen ist, hat einer der Spannbacken 23, 24 eine Durchführung 32, eine Verankerung 33 oder eine Spanneinrichtung 34 für den Untergurt 5 des Trägers 4.

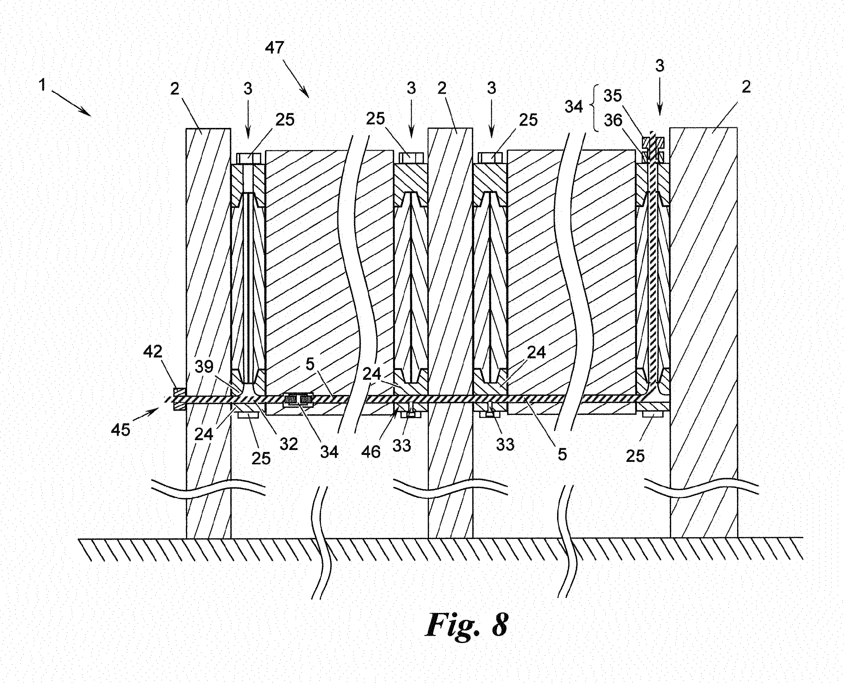

In der ersten Variante mit Durchführung 32 ist die Durchführung 32 beispielsweise eine einen Spannbacken 23, 24 (in den Fig. 5a - 6 und 8 den unteren Spannbacken 24) durchsetzende, insbesondere etwa horizontal durchsetzende Durchgangsöffnung. In diesem Fall kann der Untergurt 5 z.B. direkt an dem Vertikalbauteil 2 verankert (siehe linke Seite in Fig. 8) und unter Zugspannung gesetzt werden.

In der zweiten Variante mit Verankerung 33 kann als Verankerung 33 beispielsweise eine Klemme, bevorzugt eine Schraubklemme, eingesetzt werden. Gemäß den Beispielen der Fig. 5a und 8 (Mitte) kann eine solche Verankerung bzw. Schraubklemme 33 auch mit einer Durchführung 32, insbesondere einer etwa horizontalen Durchgangsöffnung, kombiniert werden. Alternativ könnte die Verankerung 33 beispielsweise in einer Sackbohrung des unteren Spannbackens 24 angeordnet sein.

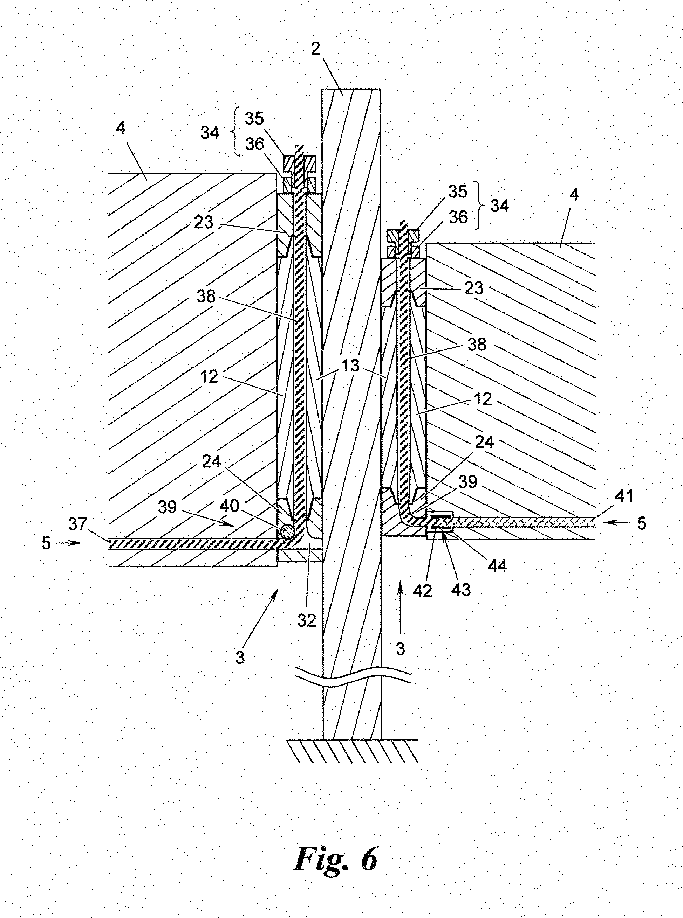

Die dritte Variante mit Spanneinrichtung 34 ist in Fig. 6 gezeigt. Im Ausführungsbeispiel der Fig. 6 hat einer der Spannbacken 23, 24 (hier: der obere Spannbacken 23) die genannte Spanneinrichtung 34, z.B. ein Spannschloss oder eine Klemmschraube 35 mit Spannmutter 36. Es versteht sich, dass alternativ dazu eine z.B. horizontal in Flucht mit dem Untergurt 5 angeordnete Spanneinrichtung 34 im unteren Spannbacken 24 vorgesehen sein könnte.

Im linken Teil des Beispiels von Fig. 6 ist der Untergurt 5 durch zumindest ein Stahlseil 37 gebildet. Das Stahlseil 37 ist an den beiden Stirnseiten 10, 11 des Trägers 4 z.B. zum Durchführen durch die Durchführung 32, zum Verankern in der Verankerung 33 oder zum Spannen in der Spanneinrichtung 34 des Verbinders 4 zugänglich. Im genannten Beispiel ist das flexible Ende 38 des Stahlseils 37 um eine im anderen Spannbacken 23, 24 (hier: dem unteren Spannbacken 24) angeordnete Umlenkung 39 in Richtung zur Spanneinrichtung 34 umgelenkt und mithilfe der Spanneinrichtung 34 unter Zugspannung gesetzt, welche Zugspannung sich um die Umlenkung 39 herum gleichermaßen auf den Untergurt 5 auswirkt. In dem linken Teil des Beispiels von Fig. 6 ist die Umlenkung 39 eine im unteren Spannbacken 24 drehbar gelagerte Rolle 40.

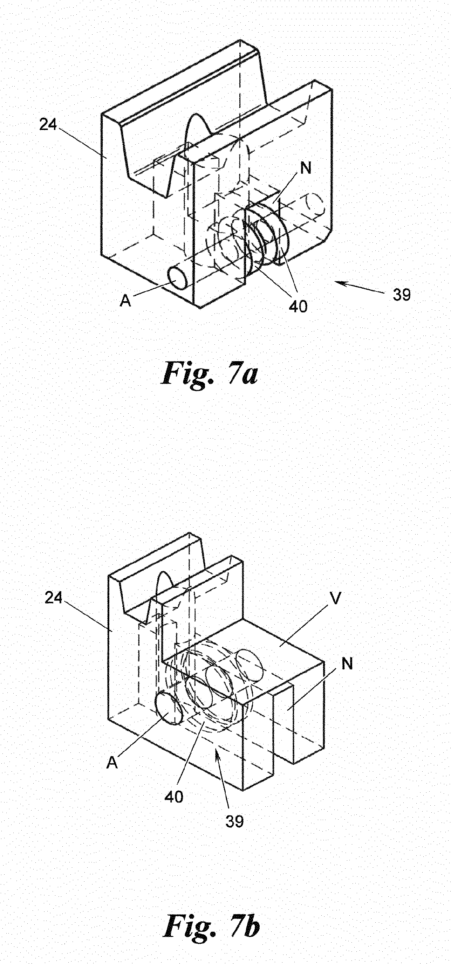

Gemäß den Beispielen der Fig. 7a und 7b können solche Rollen 40 beispielsweise im unteren Spannbacken 24 als Doppelrolle 40 in einer Nut N an einer den Spannbacken 24 quer durchsetzenden Achse A (Fig. 7a) ausgebildet sein. Alternativ können im Spannbacken 24 auch mehrere oder bloß eine einzelne, z.B. zentrale Rolle 40 in der Nut N an der Achse A angeordnet sein und/oder der Spannbacken 24 einen Vorsprung V aufweisen, sodass ein größerer Rollendurchmesser einfach erzielbar ist (Fig. 7b), wobei auf dem Vorsprung V der - optional mit einem korrespondierenden Rücksprung (nicht gezeigt) versehene - Träger 4 aufliegen kann.

Zurückkommend auf Fig. 6 kann der Untergurt 5 alternativ zum Stahlseil 37 durch zumindest einen Stab 41, z.B. einen Armierungsstahl-Stab bzw. Gewindestab, gebildet sein, wie im rechten Teil des Beispiels der Fig. 6 versinnbildlicht ist. Der an den beiden Stirnseiten 10, 11 des Trägers 4 zugängliche Stab 41 könnte durch die Durchführung 32 geführt sein und am Vertikalbauteil 2 und/oder einem in Flucht verlaufenden Stab 41 eines anschließenden Trägers 4, z.B. über eine Muffe 42, verankert sein. Er könnte alternativ in der Verankerung 33, z.B. einer Klemme, des unteren Spannbackens 24 verankert sein.

Im Ausführungsbeispiel der Fig. 6 sitzt an zumindest einer Stirnseite 43 des Stabs 41 die Muffe 42, über welche zum genannten Durchführen, Verankern oder Umlenken und Spannen des Untergurts 5 das flexible Ende 38, z.B. ein Stahlseil oder Stahlband, am Stab 41 montiert ist. Die Muffe 42 ist dabei in einer stirnseitigen Ausnehmung 44 des Trägers 4 angeordnet; sie könnte alternativ außerhalb des Trägers 4, z.B. im unteren Spannbacken 24, sitzen. Wie dieses Beispiel zeigt, kann die Umlenkung 39 auch ohne Rolle 40 ausgeführt sein. Die Spanneinrichtungen 34 gemäß dem Beispiel von Fig. 6 haben ferner eine Wirkung, welche jene des Spannglieds 25 überlagert bzw. unterstützt, und sie könnten das Spannglied 25 sogar ersetzen, d.h. selbst das Spannglied 25 sein.

Ist der Untergurt 5 des Trägers 4 durch zwei oder mehr Stahlseile 37 bzw. Stäbe 41 gebildet, so sind die Durchführung 32, die Verankerung 33 und/oder die Umlenkung 39 und die Spanneinrichtung 34 der Spannbacken 23, 24 entsprechend anzupassen bzw. zu vervielfachen, wie in den Fig. 5a und 5b angedeutet.

Ferner kann gemäß dem Beispiel des links in Fig. 8 dargestellten Trägers 4 in diesem eine von außen betätigbare Spanneinrichtung 34, z.B. eine Spannschraube oder ein Spannschloß, für den Untergurt 5 aufgenommen sein. Bevorzugt ist eine solche im Träger 4 aufgenommene Spanneinrichtung 34 aus Brandschutzgründen ebenfalls holzabgedeckt. Der Untergurt 5 dieses Trägers 4 ist an seinem linken Ende 45 durch den unteren Spannbacken 24 und den anschließenden Vertikalbauteil 2 mittels einer Muffe 42 direkt mit dem linksseitigen Vertikalbauteil 2 gekoppelt und an seinem rechten Ende 46 in einer Verankerung 33 des unteren Spannbackens 24 und somit über den Verbinder 3 am in Fig. 8 mittleren Vertikalbauteil 2 verankert.

Das Stahlseil 37 im Beispiel von Fig. 8 dient ebenso dem rechts dargestellten Träger 4 als Untergurt 5 und ist rechtsseitig in einer Spanneinrichtung 34 des Verbinders 3 gespannt und über diesen mit dem rechts abgebildeten Vertikalbauteil 2 unter Spannung gekoppelt. Deshalb könnten optional die Verankerungen 33 am mittleren Vertikalbauteil 2 von Fig. 8, welche durch die beiden Klemmen in den Verbindern 3 links und rechts dieses Vertikalbauteils 2 versinnbildlicht sind, sogar entfallen: Alle Vertikalbauteile 2 und Träger 4 wären im dargestellten Beispiel auch ohne Klemmen miteinander gekoppelt und stehen dank der Spanneinrichtungen 34 durch den gespannten Untergurt 5 gegenseitig unter Zugspannung.

Träger 4 und Verbinder 3 bilden eine Vorrichtung 47 zum Koppeln (zumindest) zweier Vertikalbauteile 2; das unter Zugspannung Setzen des Untergurts 5 ergibt eine stabile Kopplung der gesamten Anordnung 1, sodass auch ein sich durch Ungenauigkeiten oder Abnutzung ergebendes Spiel in den Verbindern 3 keine maßgebliche Auswirkung auf die Haltbarkeit und Belastbarkeit der Anordnung 1 hat. Alternativ kann, beispielsweise um stärkere Beweglichkeit der gesamten Anordnung 1 im Erdbebenfall zu ermöglichen, jedoch ein solches Spiel in den Verbindern 3 sogar bewusst vorgesehen werden.

Ferner können Durchführung 32, Verankerung 33 und/oder Umlenkung 39 an ein und demselben Spannbacken 23, 24 realisiert sein, wie anhand der Beispiele von Fig. 8 ersichtlich ist.

Der optionale Obergurt 6 wird im Beispiel der Fig. 1 und 4 am oberen Spannbacken 23 vorbeigeführt und an den Vertikalbauteilen 2 verankert und gespannt. Es versteht sich, dass alternativ der Obergurt 6 in ähnlicher Weise wie der Untergurt durch einen der Spannbacken 23, 24 durchgeführt, darin verankert und/oder gespannt werden könnte. Auch kann die Nut 9 des Obergurts 6, wenn gewünscht, zusätzlich holzabgedeckt sein. Die Erfindung ist nicht auf die dargestellten Ausführungsformen beschränkt, sondern umfasst alle Varianten, Modifikationen und Kombinationen, die unter den Schutzumfang der angeschlossenen Ansprüche fallen.

## Patentansprüche

1. Verbinder (3) zum Verbinden eines Trägers (4) aus Holz, insbesondere Brettschichtholz, mit einem Vertikalbauteil (2), welcher Träger (4) einen Untergurt (5) aus Stahl hat, umfassend
zwei Beschläge (12, 13), von denen der eine (12) mit seiner einen Seite (14) an einer Stirnseite (10, 11) des Trägers (4) und der andere (13) mit seiner einen Seite (15) am Vertikalbauteil (2) montierbar ist, wobei die Beschläge (12, 13) mit ihren jeweils anderen Seiten (16, 17) aneinander zur Anlage bringbar sind, und
zwei Spannbacken (23, 24), welche die Beschläge (12, 13) an diametralen Enden (19, 20, 21, 22) ergreifen und mittels zumindest eines etwa parallel zu den genannten anderen Seiten (16, 17) verlaufenden Spannglieds (25) gegeneinander spannbar sind, wobei
einer der Spannbacken (23, 24) eine Verankerung (33) oder eine Spanneinrichtung (34) für den Untergurt (5) des Trägers (4) hat.

2. Verbinder nach Anspruch 1, bei welchem einer der Spannbacken (23, 24) eine Verankerung (33) hat, **dadurch gekennzeichnet, dass** die Verankerung (33) eine Klemme, bevorzugt eine Schraubklemme, ist.

3. Verbinder nach Anspruch 1 oder 2, bei welchem einer der Spannbacken (23, 24) eine Spanneinrichtung (34) hat, **dadurch gekennzeichnet, dass** der andere Spannbacken (23, 24) eine Umlenkung (39) für ein flexibles Ende (38) des Untergurts (5) zur Spanneinrichtung (34) umfasst.

4. Verbinder nach Anspruch 3, **dadurch gekennzeichnet, dass** die Umlenkung (39) eine im Spannbacken (23, 24) drehbar gelagerte Rolle (40) ist.

5. Verbinder nach einem der Ansprüche 1 bis 4, **dadurch gekennzeichnet, dass** das genannte Spannglied (25) eine Gewindestange (27) umfasst, welche in einander zugewandten Halbkehlen (30, 31) der genannten anderen Seiten (16, 17) aufgenommen ist.

6. Vorrichtung (47) zum Koppeln zweier Vertikalbauteile (2), umfassend einen Träger (4) aus Holz, insbesondere Brettschichtholz, mit einem Untergurt (5) aus Stahl, welcher an beiden Stirnseiten (10, 11) des Trägers (4) zugänglich ist, und zwei Verbinder (3) nach einem der Ansprüche 1 bis 5 zum Verbinden der beiden Stirnseiten (10, 11) des Trägers (4) mit jeweils einem Vertikalbauteil (2), **dadurch gekennzeichnet, dass** der Untergurt (5) an jedem seiner Enden (45, 46) direkt oder über einen der Verbinder (3) mit einem Vertikalbauteil (2) gekoppelt ist und die Vorrichtung zumindest eine Spanneinrichtung (34) zum Spannen des Untergurts (5) hat.

7. Vorrichtung nach Anspruch 6, **dadurch gekennzeichnet, dass** der Untergurt (5) in einer holzabgedeckten Nut (7) an der Unterseite des Trägers (4) aufgenommen ist.

8. Vorrichtung nach Anspruch 6 oder 7, **dadurch gekennzeichnet, dass** der Untergurt (5) durch zumindest ein Stahlseil (37) gebildet ist.

9. Vorrichtung nach Anspruch 6 oder 7, **dadurch gekennzeichnet, dass** der Untergurt (5) durch zumindest einen Stab (41) gebildet ist.

10. Vorrichtung nach Anspruch 9, **dadurch gekennzeichnet, dass** der Stab (41) ein Gewindestab ist.

11. Vorrichtung nach Anspruch 9 oder 10, **dadurch gekennzeichnet, dass** der Stab (41) an zumindest einer seiner Stirnseiten (43) ein flexibles Ende (38) zum Verankern in einer Verankerung (33) eines der Spannbacken (23, 24) oder zum Spannen in einer Spanneinrichtung (34) eines der Spannbacken (23, 24) hat, welches über eine Muffe (42) am Stab (41) montiert ist.

12. Vorrichtung nach Anspruch 11, **dadurch gekennzeichnet, dass** die Muffe (42) in einer stirnseitigen Ausnehmung (44) des Trägers (4) sitzt.

13. Vorrichtung nach einem der Ansprüche 6 bis 12, **dadurch gekennzeichnet, dass** im Träger (4) eine von außen betätigbare Spanneinrichtung (34) für den Untergurt (5) aufgenommen ist.

14. Vorrichtung nach einem der Ansprüche 6 bis 13, **dadurch gekennzeichnet, dass** der Träger (4) ferner einen in einer Nut (9) an seiner Oberseite aufgenommenen Obergurt (6) aus Stahl hat, welcher an den beiden Stirnseiten (10, 11) des Trägers (4) zugänglich ist.

## Claims

1. Connector (3) for connecting a support (4) made of wood, particularly glued laminated timber, with a vertical component (2), which support (4) has a lower chord (5) made of steel, comprising
two fittings (12, 13), of which one (5) can be mounted with its one side (14) on a face side (10, 11) of the support (4) and the other one (13) can be mounted with its one side (15) on the vertical component (2), wherein the fittings (12, 13) can be brought into abutment with their respective other sides (16, 17), and
two clamping jaws (23, 24) which grasp the fittings (12, 13) on diametrical ends (19, 20, 21, 22) and can be clamped against one another by means of at least one tensioning member (25) running approximately parallel to said other sides (16, 17), wherein
one of the clamping jaws (23, 24) has an anchorage (33) or a tensioning device (34) for the lower chord (5) of the support (4).

2. Connector according to claim 1, in which one of the clamping jaws (23, 24) has an anchorage (33), **characterised in that** the anchorage (33) is a clamp, preferably a screw clamp.

3. Connector according to claim 1 or 2, in which one of the clamping jaws (23, 24) has a tensioning device (34), **characterised in that** the other clamping jaw (23, 24) comprises a deflection (39) for a flexible end (38) of the lower chord (5) towards the tensioning element (34).

4. Connector according to claim 3, **characterised in that** the deflection (39) is a roller (40) supported rotatably in the clamping jaw (23, 24).

5. Connector according to any one of claims 1 to 4, **characterised in that** said clamping member (25) comprises a threaded rod (27) which is received in half-flutes (30, 31) of said other sides (16, 17), which half-flutes face each other.

6. Apparatus (47) for coupling two vertical components (2), comprising a support (4) made of wood, particularly glued laminated timber, with a lower cord (5) made of steel which is accessible on both face sides (10, 11) of the support (4), and two connectors (3) according to any one of claims 1 to 5 for connecting both face sides (10, 11) of the support (4) respectively with a vertical component (2), **characterised in that** the lower chord (5) is coupled on each of its ends (45, 46) with a vertical component (2) directly or via one of the connectors (3) and that the apparatus has at least one tensioning device (34) for tensioning the lower chord (5).

7. Apparatus according to claim 6, **characterised in that** the lower chord (5) is received in a wood-covered groove (7) on the lower side of the support (4).

8. Apparatus according to claim 6 or 7, **characterised in that** the lower chord (5) is formed by at least one steel cable (37).

9. Apparatus according to claim 6 or 7, **characterised in that** the lower chord (5) is formed by at least one rod (41).

10. Apparatus according to claim 9, **characterised in that** the rod (41) is a threaded rod.

11. Apparatus according to claim 9 or 10, **characterised in that** the rod (41) has a flexible end (38) on at least one of its face sides (43) for anchoring in an anchorage (33) of one of the clamping jaws (23, 24) or for tensioning in a tensioning device (34) of one of the clamping jaws (23, 24), which end (38) is mounted on the rod (41) via a socket (42).

12. Apparatus according to claim 11, **characterised in that** the socket (42) is located in a face-sided recess (44) of the support (4).

13. Apparatus according to any one of claims 6 to 12, **characterised in that** a tensioning device (34) which can be actuated from outside for the lower chord (5) is received in the support (4).

14. Apparatus according to any one of claims 6 to 13, **characterised in that** the support (4) further has an upper chord (6) made of steel and received in a groove (9) on the upper side of the support (4), which upper chord (6) is accessible on both face sides (10, 11) of the support (4).

## Revendications

1. Connecteur (3) pour relier un support (4) en bois, notamment en bois lamellé-collé, avec un composant vertical (2), lequel support (4) a un tirant inférieur (5) en acier, comprenant
deux ferrures (12, 13) parmi lesquels l'une (12) peut être montée avec un de ses côtés (14) sur un côté frontal (10, 11) du support (4) et l'autre (13) peut être montée avec un de ses côtés (15) sur le composant vertical (2), où les ferrures (12, 13) peuvent être mises en appui l'une contre l'autre avec leurs autres côtés respectifs (16, 17), et
deux mâchoires de serrage (23, 24), lesquelles prennent en prise les ferrures (12, 13) au niveau d'extrémités diamétrales (19, 20, 21, 22) et peuvent être serrées l'une contre l'autre au moyen d'au moins un organe de serrage (25) s'étendant à peu près parallèlement par rapport auxdits autres côtés (16, 17), où
une des mâchoires de serrage (23, 24) a un ancrage (33) ou un dispositif de serrage (34) pour le tirant inférieur (5) du support (4).

2. Connecteur selon la revendication 1, chez lequel une des mâchoires de serrage (23, 24) a un ancrage (33), **caractérisé en ce que** l'ancrage (33) est une pince, de préférence une pince à vis.

3. Connecteur selon la revendication 1 ou 2, chez lequel une des mâchoires de serrage (23, 24) a un dispositif de serrage (34), **caractérisé en ce que** l'autre mâchoire de serrage (23, 24) comprend un renvoi (39) pour une extrémité (38) flexible du tirant inférieur (5) vers le dispositif de serrage (34).

4. Connecteur selon la revendication 3, **caractérisé en ce que** le renvoi (39) est un rouleau (40) logé en pouvant tourner dans la mâchoire de serrage (23, 24).

5. Connecteur selon l'une des revendications 1 à 4, **caractérisé en ce que** ledit organe de serrage (25) comprend une tige filetée (27), laquelle est reçue dans des demies gorges (30, 31) desdits autres côtés (16, 17), lesquelles demies gorges se faisant face l'une à l'autre.

6. Dispositif (47) de couplage de deux composants verticaux (2), comprenant un support (4) en bois, notamment en bois lamellé-collé, avec un tirant inférieur (5) en acier, lequel est accessible au niveau des deux côtés frontaux (10, 11) du support (4), et deux connecteurs (3) selon l'une des revendications 1 à 5 pour relier les deux côtés frontaux (10, 11) du support (4) avec respectivement un composant vertical (2), **caractérisé en ce que** le tirant inférieur (5) est couplé au niveau de chacune de ses extrémités (45, 46) directement ou par le biais de l'un des connecteurs (3) avec un composant vertical (2) et le dispositif a au moins un dispositif de serrage (34) pour le serrage du tirant inférieur (5).

7. Dispositif selon la revendication 6, **caractérisé en ce que** le tirant inférieur (5) est reçu dans une rainure (7) recouverte de bois au niveau du côté inférieur du support (4).

8. Dispositif selon la revendication 6 ou 7, **caractérisé en ce que** le tirant inférieur (5) est formé par au moins un câble en acier (37).

9. Dispositif selon la revendication 6 ou 7, **caractérisé en ce que** le tirant inférieur (5) est formé par au moins une barre (41).

10. Dispositif selon la revendication 9, **caractérisé en ce que** la barre (41) est une barre filetée.

11. Dispositif selon la revendication 9 ou 10, **caractérisé en ce que** la barre (41) a une extrémité (38) flexible au niveau d'au moins un de ses côtés frontaux (43) pour l'ancrage dans un ancrage (33) d'une des mâchoires de serrage (23, 34) ou pour le serrage dans un dispositif de serrage (34) d'une des mâchoires de serrage (23, 24), laquelle extrémité est montée sur la barre (41) par le biais d'un manchon (42).

12. Dispositif selon la revendication 11, **caractérisé en ce que** le manchon (42) est logé dans un évidement (44) du côté frontal du support (4).

13. Dispositif selon l'une des revendications 6 à 12, **caractérisé en ce qu'**un dispositif de serrage (34) pouvant être actionné de l'extérieur pour le tirant inférieur (5) est reçu dans le support (4).

14. Dispositif selon l'une des revendications 6 à 13, **caractérisé en ce que** le support (4) a en outre un tirant supérieur (6) en acier reçu dans une rainure (9) au niveau du côté supérieur du support (4), lequel tirant supérieur (6) est accessible au niveau des deux côtés frontaux (10, 11) du support (4).
